# FASCICULE DE BREVET EUROPEEN

(11) **EP 3 408 925 B1**
(45) Date de publication et mention de la délivrance du brevet: **27.01.2021**
(21) Numéro de dépôt: 17707598.3
(22) Date de dépôt: 25.01.2017
(51) Int. Cl.: H02K 5/24, F04D 25/08, F04D 29/66, F16F 1/373, F16F 15/08

(54) **ENSEMBLE DE SUPPORT D'UN MOTEUR ÉLECTRIQUE, NOTAMMENT DANS UN DISPOSITIF DE CHAUFFAGE, VENTILATION ET/OU CLIMATISATION POUR VÉHICULE AUTOMOBILE**
ANORDNUNG ZUR ABSTÜTZUNG EINES ELEKTROMOTORS, INSBESONDERE IN EINER HEIZ-, BELÜFTUNGS- UND/ODER KLIMATISIERUNGSVORRICHTUNG EINES KRAFTFAHRZEUGS
ASSEMBLY FOR SUPPORTING AN ELECTRIC MOTOR, IN PARTICULAR IN A HEATING, VENTILATION AND/OR AIR CONDITIONING DEVICE FOR A MOTOR VEHICLE

(30) Priorité: 26.01.2016 FR 1650597
(43) Date de publication de la demande: 05.12.2018
(73) Titulaire: Valeo Systemes Thermiques, 78320 Le Mesnil Saint Denis (FR)
(72) Inventeur: LE GOFF, Morgan, 78322 Le Mesnil Saint-Denis Cedex (FR); CAPOULUN, Geoffroy, 78322 Le Mesnil Saint-Denis Cedex (FR); RUDLOFF, Emmanuel, 78322 Le Mesnil Saint-Denis Cedex (FR)
(74) Mandataire: Tran, Chi-Hai
(86) Numéro de dépôt international: PCT/FR2017/050164
(87) Numéro de publication internationale: WO 2017/129901

(56) Documents cités:
- EP-A1- 0 736 954
- EP-A1- 1 634 737
- EP-A1- 2 456 053
- EP-A2- 1 335 479
- WO-A1-2009/032102
- WO-A1-2012/034687
- DE-A1- 10 128 535

## Description

La présente invention se rapporte au domaine des dispositifs de chauffage, de ventilation et/ou de climatisation pour véhicules automobiles, et elle concerne plus particulièrement un ensemble de support d'un moteur électrique pour un tel dispositif.

Les véhicules automobiles sont couramment équipés de dispositifs de chauffage, ventilation et/ou climatisation, qui permettent de générer un ou plusieurs flux d'air et d'en gérer la température et la distribution au sein de l'habitacle du véhicule. Ces dispositifs de chauffage, ventilation et/ou climatisation comportent, entre autres, un dispositif de pulsion d'air mis en marche par un moteur électrique pour générer un flux d'air. Par dispositif de pulsion d'air, on entend un dispositif permettant d'aspirer et/ou de souffler de l'air. Le moteur électrique est notamment un moteur électrique à commutation électronique, piloté par un module d'alimentation pour entraîner en rotation une roue de ventilation.

Les moteurs électriques à commutation électronique, ou moteurs à courant continu sans balai (connu également sous la dénomination anglaise de « brushless »), comportent un ensemble rotor et stator, chacun de ces composants étant porteur d'éléments électromagnétiques dont l'interaction génère le déplacement du rotor relativement au stator, et plus loin le déplacement de la roue de ventilation. Le rotor et le stator sont montés indépendamment l'un de l'autre dans ledit moteur, et il convient de s'assurer que le positionnement relatif de ces deux composants est correct pour un fonctionnement optimal du moteur.

L'assemblage du moteur électrique dans le dispositif de chauffage, ventilation et/ou climatisation est réalisé par l'intermédiaire d'un ensemble de support qui comprend avantageusement une bague intérieure configurée pour accueillir le stator du moteur électrique et une bague extérieure apte à être fixée à un élément de structure du véhicule formant boîtier de réception du dispositif de chauffage, ventilation et/ou climatisation.

On comprend que lorsque le moteur est en fonctionnement, le stator est soumis à des vibrations et contraintes dues au mouvement en rotation du rotor, et il est recherché que ces vibrations ne soient pas transmises à la bague extérieure fixée à la structure véhicule, afin d'éviter une usure prématurée de l'ensemble. On prévoit alors un élément de découplage entre les deux bagues, dont le rôle principal est de filtrer les fréquences acoustiques et les vibrations générées par le moteur et de supprimer ou, à tout le moins, de limiter au maximum, leur transmission, via le boîtier, au dispositif de chauffage, ventilation et/ou climatisation et à la structure du véhicule.

Cet élément de découplage est réalisé en un matériau apte à remplir le rôle attendu vis-à-vis des vibrations mécaniques et acoustiques (par exemple, un matériau élastomère), ledit matériau étant inséré entre la bague intérieure d'accueil du stator du moteur et la bague extérieure de liaison au boîtier formant élément de structure du véhicule. On peut prévoir que ce matériau est inséré soit sous la forme d'une bague annulaire s'étendant intégralement entre les bagues intérieure et extérieure de l'ensemble de support, soit sous la forme d'une pluralité d'éléments discrets répartis régulièrement angulairement entre bague intérieure et bague extérieure. Quelle que soit la forme prise par cet élément de découplage, il entre dans son rôle de limiter au maximum, voire de supprimer, en particulier, tout mouvement relatif trop important des bagues intérieure et extérieure l'une par rapport à l'autre et, notamment, tout mouvement de basculement de l'une de ces bagues par rapport à l'autre.

Le document WO2012/034687A1 divulgue un ensemble de support d'un moteur comportant une bague intérieure et une bague extérieure. Cet ensemble comprend en outre des moyens de limitation du basculement de la bague intérieure comprenant des éléments saillants. De plus, des moyens de réduction du débattement des éléments saillants ainsi qu'un élément de découplage entre les bagues sont prévus pour limiter les vibrations.

Le but de la présente invention est de proposer un ensemble de support pour un dispositif de chauffage, ventilation et/ou climatisation d'un véhicule automobile qui soit de réalisation simple et dans lequel la transmission des vibrations générées par le fonctionnement du moteur électrique soit réduite au maximum, voire supprimée.

Dans ce but, l'invention a pour objet un ensemble de support défini par la revendication 1. Cet ensemble est prévu pour un moteur, notamment pour un dispositif de chauffage, de ventilation et/ou de climatisation d'un véhicule automobile, et comprend deux bagues coaxiales dont une bague intérieure apte à recevoir un ou plusieurs éléments du moteur, et une bague extérieure apte à être fixée sur un boîtier formant élément de structure. On prévoit dans cet ensemble de support des moyens de limitation du basculement de la bague intérieure par rapport à la bague extérieure, dont un élément saillant qui s'étend en saillie d'une première des deux bagues, pour venir loger dans un logement formé dans la deuxième des deux bagues, et des moyens de réduction du débattement de l'élément à l'intérieur dudit logement.

Selon des caractéristiques de l'invention propres à l'agencement des moyens de réduction du débattement, on pourra prévoir que ceux-ci s'étendent selon une direction sensiblement parallèle à un axe de révolution de ladite deuxième bague, et/ou sensiblement perpendiculaire à la direction d'allongement de l'élément saillant.

L'élément saillant formant moyen de limitation du basculement peut prendre la forme d'un doigt anti-basculement dimensionné pour s'insérer au sein d'un premier orifice agencé au sein de la deuxième des deux bagues pour former le logement du doigt.

On pourra notamment prévoir que les moyens de limitation du basculement, notamment le doigt anti-basculement, sont portés par la bague intérieure et que le logement est formé dans la bague extérieure, ce logement consistant en un premier orifice qui peut être ou non traversant.

Selon un mode de réalisation préféré de l'invention, les doigts anti-basculement sont angulairement régulièrement répartis sur le pourtour de la bague intérieure, et la bague extérieure comporte autant d'orifices formant logements que la bague intérieure compte de doigts anti-basculement.

Les moyens de réduction prennent la forme de deux pions venant en saillie d'une paroi définissant le logement, pour s'étendre à l'intérieur de ce premier orifice en regard respectivement d'une face de l'élément saillant. Ces pions s'étendent à travers cette paroi pour venir loger à l'intérieur du logement.

Avantageusement, la bague intérieure a une forme générale sensiblement cylindrique, et chaque doigt anti-basculement s'étend radialement, à partir de sa paroi extérieure, à l'opposé d'un orifice d'accueil d'éléments du moteur agencé en son centre.

Selon l'invention
- les pions sont disposés en regard l'un de l'autre, venant respectivement en saillie d'une paroi définissant le logement pour s'étendre à l'intérieur de ce premier orifice en regard d'une face de l'élément saillant
- les deux pions s'étendent à l'intérieur du logement de part et d'autre de l'élément saillant relativement à un axe sensiblement parallèle à un axe de révolution de la bague intérieure, en venant en saillie de deux parois opposées ;
- les parois opposées qui délimitent axialement chaque logement de la bague extérieure sont percées, selon une direction parallèle à celle de l'axe de la bague extérieure, respectivement d'un premier orifice débouchant et d'un deuxième orifice débouchant pour être traversés respectivement par un desdits deux pions, et ces orifices débouchants sont agencés de telle manière que leurs surfaces se trouvent, dans leur totalité, respectivement au regard de deux faces parallèles opposées de l'élément saillant engagé dans le logement considéré ;

Selon des modes de réalisation avantageux, on peut prévoir que:
- les deux orifices débouchants sont coaxiaux ;
- les moyens de réduction du débattement comportent un premier type de pions formant butée axiale, selon lequel chaque pion est apte à être engagé dans le premier orifice débouchant d'un logement, ainsi qu'un deuxième type de pions formant butée axiale, selon lequel chaque pion est apte à être engagé dans le deuxième orifice débouchant du même logement ;
- le premier type de pions formant butée axiale est constitué de pions fixes agencés à la surface intérieure d'un logement ménagé dans le boîtier pour accueillir l'ensemble formé par la bague intérieure et la bague extérieure ;
- le deuxième type de pions formant butée axiale est constitué de pions rivetés ou bouterollés sur la deuxième des deux bagues ;
- l'ensemble de support peut comporter autant de pions du premier type et de pions du deuxième type que de logements et de doigts anti-basculement.

On pourra prévoir que les moyens de limitation de débattement sont angulairement régulièrement répartis sur le pourtour de la bague porteuse des logements, notamment la bague extérieure.

Dans ce contexte, une pluralité de pions du premier type, respectivement du deuxième type, peut être angulairement régulièrement répartie sur une première face de la bague extérieure et une pluralité de pions du deuxième type, respectivement du premier type, peut être angulairement régulièrement répartie sur une deuxième face opposée de la bague extérieure.

Selon l'invention, un élément de découplage est inséré entre la bague intérieure et la bague extérieure, pour l'amortissement des vibrations, et se prolonge autour d'au moins un des éléments saillants au sein de chaque logement dans lequel il est engagé, ledit au moins un moyen de réduction du débattement associé s'étendant en regard de la partie de l'élément de découplage autour dudit élément saillant.

Selon une caractéristique avantageuse de l'invention, chaque doigt anti-basculement présente, en coupe, sensiblement la forme d'un H avec une branche centrale et deux branches parallèles agencées à chacune des extrémités de la branche centrale. Et cette branche centrale s'étend avantageusement parallèlement à l'axe de révolution de la bague qui porte le doigt anti-basculement.

L'invention concerne également un dispositif de chauffage, de ventilation et/ou de climatisation pour un véhicule automobile, caractérisé en ce qu'il comporte un moteur et un ensemble de support de ce moteur tel que décrit ci-dessus. Notamment lorsque les pions comportent un premier type de pions amovibles et un deuxième type de pions fixes, on pourra prévoir que les pions amovibles sont agencés du côté de l'ensemble de support opposé au moteur, les pions fixes étant agencés du côté du moteur.

D'autres caractéristiques, détails et avantages de l'invention ressortiront plus clairement à la lecture de la description donnée ci-après à titre indicatif en relation avec les figures suivantes :
- la figure 1 est une vue générale schématique, en perspective, d'un ensemble de support d'un moteur électrique selon un mode de réalisation préféré de l'invention, ledit ensemble étant monté dans un boîtier,
- la figure 2 est une vue schématique en perspective d'une bague intérieure de l'ensemble support de la figure 1,
- la figure 3 est une vue schématique en perspective d'une bague extérieure de l'ensemble support de la figure 1,
- la figure 4 est une vue schématique, sensiblement dans la même perspective que celle des figures 2 et 3, illustrant l'assemblage de la bague intérieure de la figure 2 et de la bague extérieure de la figure 3,
- la figure 5 est une vue en perspective d'un ensemble de support seul, avec un élément de découplage inséré entre la bague intérieure et la bague extérieure, dans laquelle on a rendu visible, et notamment par le détail 5a, la coopération d'un doigt anti-basculement porté par la bague intérieure avec un logement traversant la bague extérieure,
- la figure 6 est une vue en perspective de l'élément de découplage de la figure 5, avec un détail 6a dans lequel une membrane de cet élément de découplage est vue en coupe,
- la figure 7 est une vue de la bague extérieure de l'ensemble et du boîtier selon l'invention, dans une vue en perspective semblable à celle de la figure 1 et dans laquelle la bague intérieure et l'élément de découplage ont été retirés, pour rendre visible des pions limitant l'ouverture du logement dans lequel s'étend le doigt anti-basculement,
- la figure 8 est une vue en perspective schématique coupée d'un détail montrant l'agencement des pions formant butée relativement à un doigt anti-basculement,
- et la figure 9 est une vue schématique en perspective d'un pion formant butée amovible de l'ensemble selon un mode de réalisation préféré de l'invention.

Il faut tout d'abord noter que les figures exposent l'invention de manière détaillée pour sa mise en œuvre, lesdites figures pouvant bien entendu servir à mieux définir l'invention le cas échéant.

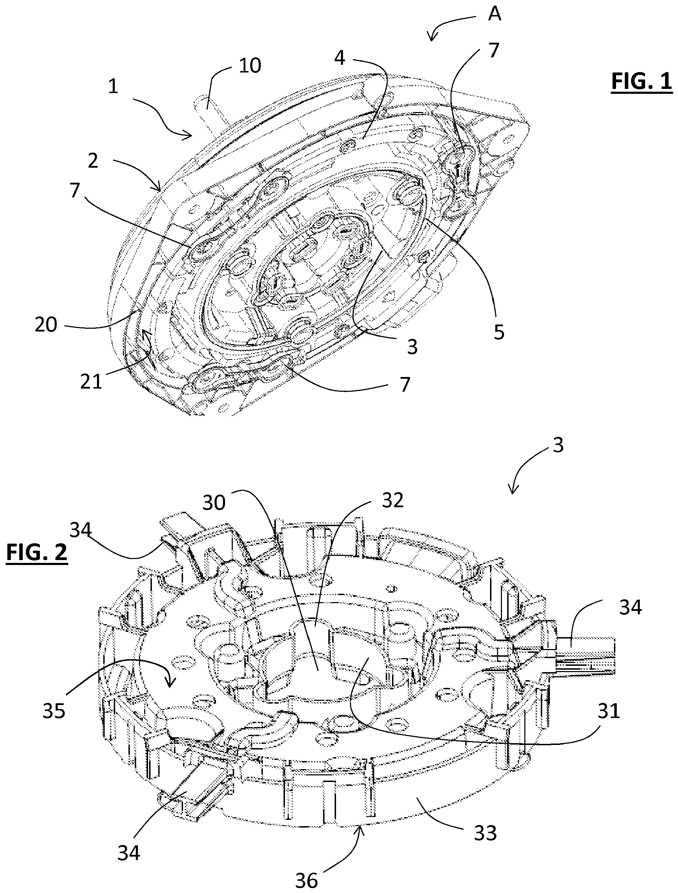

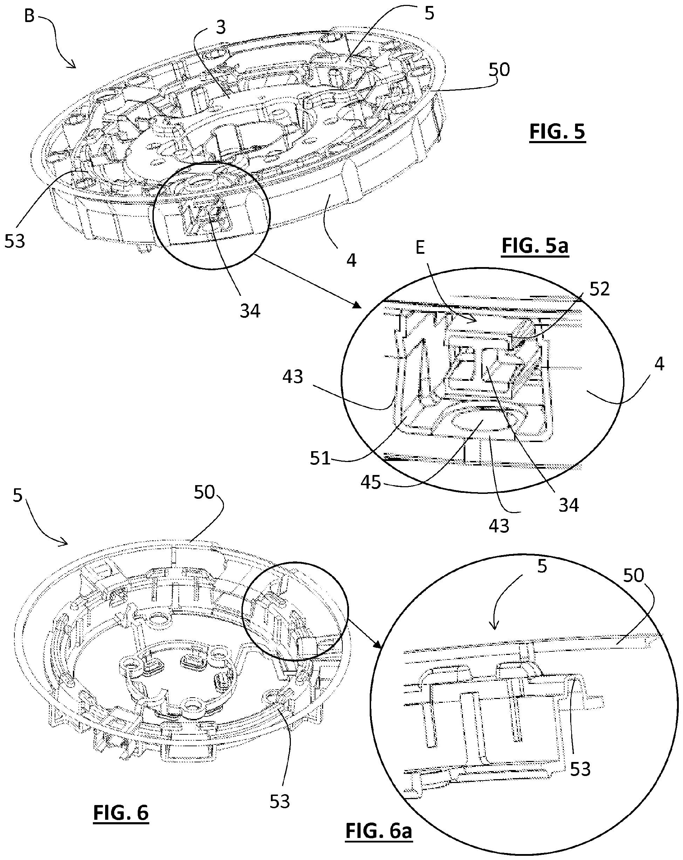

La figure 1 montre un ensemble A formé d'un moteur électrique 1, de type rotor/stator, monté sur un ensemble de support B (visible seul notamment sur la figure 5), lui-même rendu solidaire d'un boîtier 2 de structure d'un dispositif de chauffage, de ventilation et/ou de climatisation. L'ensemble de support B comporte une bague intérieure 3, rendue solidaire du stator (ici non visible) du moteur électrique, une bague extérieure 4, fixée sur le boîtier 2, et un élément de découplage 5 dont une partie au moins est placée entre la bague intérieure 3 et la bague extérieure 4.

Comme le montre la figure 1, la bague intérieure 3, la bague extérieure 4, et l'élément de découplage 5 sont sensiblement coaxiaux à l'axe de rotation de l'ensemble rotor/stator du moteur électrique 1, matérialisé par l'arbre de sortie 10. Par ailleurs, le boîtier 2 forme sensiblement une forme de révolution sensiblement autour de cet axe commun au moteur et à l'ensemble de support. Le boîtier présente une surface d'appui 20 et des pattes de fixation pour être plaqué et vissé sur une surface d'appui correspondante non représentée, et cette surface d'appui est sensiblement annulaire pour délimiter une cavité de réception 21 apte à accueillir l'ensemble de support B comprenant la bague intérieure 3, la bague extérieure 4 et l'élément de découplage 5. En d'autres termes, le boîtier 2 a une forme concave, et l'ensemble formé par la bague intérieure 3, la bague extérieure 4 et l'élément de découplage 5 est accueilli dans la cavité formée par la partie concave de ce boîtier. Avantageusement, les dimensions des bagues intérieure 3 et extérieure 4 et de l'élément de découplage 5 sont définies de telle manière qu'une fois logé dans le boîtier 2, l'ensemble qu'ils forment affleure sensiblement la surface d'appui 20 de ce boîtier.

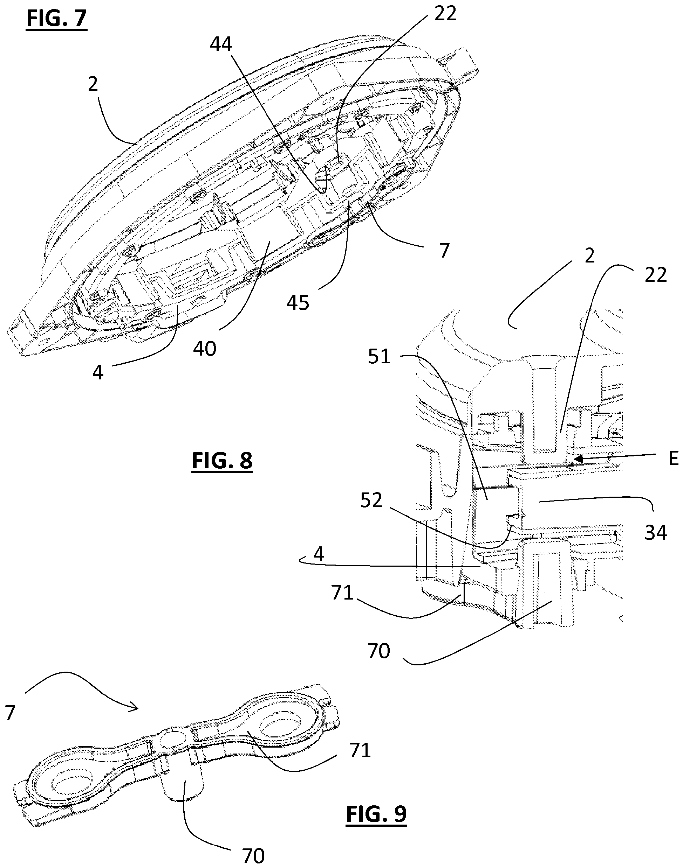

Dans ce qui suit, de manière arbitraire, les mentions "haut" et "bas" se réfèreront à l'orientation de l'ensemble A tel qu'illustré par la Figure 1. Ainsi, les mentions "haut" ou "supérieur" désigneront la partie et/ou les éléments situés, une fois l'ensemble A réalisé, du même côté que l'arbre de sortie 10 du moteur par rapport à la surface d'appui 20 précédemment définie, les mentions "bas" ou "inférieur" désignant alors, par conséquent, les parties ou éléments situés à l'opposé des éléments et/ou parties repérés comme "hauts" ou "supérieurs". En référence à ces conventions arbitraires :
- les angles de vue des figures 2 à 6 sont tels que les éléments y sont montrés avec les faces supérieures correspondantes visibles,
- l'angle de vue des figures 1 et 7 montre plus spécifiquement les parties inférieures des bagues, de l'élément de découplage et du boîtier 2.

En référence à la figure 2, la bague intérieure 3 a la forme générale d'un cylindre dont le diamètre extérieur est supérieur à l'épaisseur, et dont l'épaisseur est sensiblement égale à la profondeur de la cavité de réception 21 formée dans le boîtier 2, tel que cela a été défini plus haut. La bague intérieure 3 est percée, sensiblement axialement, d'un orifice 30, de forme générale sensiblement cylindrique, destiné à accueillir des éléments du moteur 1. A cette fin, des formes particulières 32 sont agencées, sensiblement radialement, à partir de la paroi intérieure 31 délimitant l'orifice 30, pour favoriser la mise en place et le maintien de ces éléments du moteur 1 dans la bague intérieure 3. Ces formes particulières 32 prennent ici la forme d'encoches ménagées radialement à partir de la paroi intérieure 31, et elles sont angulairement régulièrement réparties sur la paroi intérieure 31, au nombre de 3. Il va de soi que toute forme, tout nombre, et toute orientation des formes particulières 32 à partir de la paroi intérieure 31 de l'orifice 30 peuvent également être envisagés, dans la mesure où ils permettent l'insertion et le maintien, au sein de la bague intérieure 3, des éléments du moteur 1 appelés à y être placés.

A sa périphérie extérieure, la bague intérieure 3 est limitée par une paroi extérieure 33 dont le profil général est sensiblement cylindrique, dans laquelle et à partir de laquelle sont agencées un certain nombre d'éléments en saillie radiale, aptes à coopérer avec la bague extérieure 4 et/ou avec l'élément de découplage 5, pour participer à des moyens de limitation du basculement de la bague intérieure par rapport à la bague extérieure. On comprendra que sans sortir du contexte de l'invention, on pourrait prévoir que les éléments en saillie s'étendent radialement depuis une paroi intérieure de la bague extérieure 4, en direction de l'élément de découplage et de la bague intérieure.

En particulier, selon l'invention, des moyens de limitation du basculement de la bague intérieure par rapport à la bague extérieure comportent des doigts anti-basculement 34 issus de matière avec la bague intérieure 3 et qui s'étendent radialement à partir de la paroi extérieure 33 de celle-ci, dans la direction opposée à celle de l'axe de révolution de la bague intérieure 3. Avantageusement, mais de manière non exclusive, quel que soit leur nombre, les doigts anti-basculement sont angulairement régulièrement répartis à la surface de la paroi extérieure 33 de la bague intérieure 3. Il est toutefois envisageable, pour des raisons d'encombrement ou pour d'autres raisons mécaniques, que la répartition angulaire des doigts anti-basculement 34 à partir de la paroi extérieure 33 de la bague intérieure 3 soit différente. Selon le mode de réalisation préféré de l'invention illustré par la figure 2, les doigts anti-basculement 34 sont au nombre de 3, et ils sont angulairement régulièrement répartis à la surface de la paroi extérieure 33 avec un angle de 120° ainsi formé entre deux doigts anti-basculement 34 consécutifs sur la paroi extérieure 33 de la bague intérieure 3. Selon d'autres modes de réalisation, le nombre de doigts anti-basculement 34 peut être différent, sans qu'il nuise à l'invention.

Avantageusement, chaque doigt anti-basculement 34 s'inscrit, à partir de la paroi extérieure 33, dans un premier volume sensiblement parallélépipédique V (non représenté sur les figures) dont la dimension, selon la direction radiale selon laquelle s'étend le doigt anti-basculement considéré, est supérieure aux autres dimensions. En d'autres termes, si l'on désigne par "longueur" la dimension radiale selon laquelle s'étend un doigt anti-basculement 34 donné à partir de la paroi extérieure 33 de la bague intérieure 3, cette longueur est supérieure à la largeur et à la hauteur du premier volume sensiblement parallélépipédique V dans lequel s'inscrit ce doigt. Plus précisément, au sein de ce premier volume sensiblement parallélépipédique V, le doigt anti-basculement présente, en coupe selon un plan perpendiculaire à la longueur de ce doigt, la forme générale d'un H renversé dont les deux branches parallèles sont disposées, en référence aux orientations définies plus haut, parallèlement à une face supérieure 35 et une face inférieure 36 de la bague intérieure 3. Avantageusement, les branches du doigt anti-basculement ont sensiblement la même épaisseur, que ce soit les branches parallèles du H ou bien la branche centrale de ce même H. On comprend que la branche centrale s'étend sensiblement parallèlement à l'axe de révolution de la bague qui porte le doigt anti-basculement.

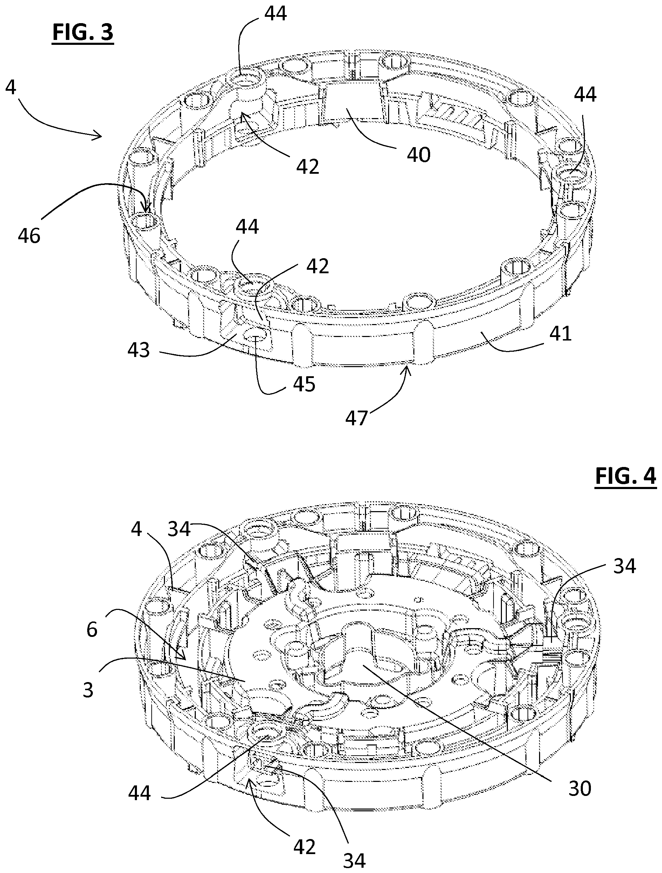

En référence à la figure 3, la bague extérieure 4 a sensiblement la forme d'un anneau circulaire avec une paroi intérieure 40 et une paroi extérieure 41 définissant l'épaisseur de la bague extérieure 4. Le diamètre de la paroi intérieure, sensiblement cylindrique, 40 est supérieur au diamètre de la paroi extérieure, sensiblement cylindrique, 33 de la bague intérieure 3. Plus précisément, le diamètre de la paroi extérieure 33 de la bague intérieure 3, hors les doigts anti-basculement 34, et le diamètre de la paroi intérieure, sensiblement cylindrique, 40 de la bague extérieure 4, sont définis de telle manière qu'au sein de l'ensemble qu'elles forment avec l'élément de découplage 5, ces deux bagues permettent le passage de l'élément de découplage entre elles, dans un agencement coaxial avec leur axe commun confondu, lorsque l'ensemble A est réalisé, avec l'arbre de sortie 10 du moteur. Comme le montre plus précisément la figure 4, ces dimensions sont définies de telle manière qu'un espace sensiblement annulaire 6 existe entre la paroi extérieure 33 de la bague intérieure 3 et la paroi intérieure 40 de la bague extérieure 4. Le diamètre et la forme de la paroi extérieure 41, sensiblement cylindrique, de la bague extérieure 4 sont, pour leur part, définis de telle manière que l'insertion, au sein de la cavité de réception agencée dans le boîtier 2, de l'ensemble formé par la bague extérieure 4, la bague intérieure 3 et l'élément de découplage 5, se fasse sans frottement et sans jeu excessifs qui pourraient remettre en cause le bon fonctionnement de l'ensemble A.

Selon l'invention, des premiers orifices 42 sont agencés radialement dans la bague extérieure 4. Chaque premier orifice 42 est ici traversant, en ce qu'il s'étend radialement depuis la paroi intérieure 40, dans laquelle il débouche, jusqu'à la paroi extérieure 41, dans laquelle il débouche également. Chaque orifice traversant 42 est délimité par une paroi interne 43 et forme, au sein de la partie annulaire de bague extérieure 4, un logement d'un deuxième volume radial sensiblement parallélépipédique V' (non représenté sur les figures). Ce deuxième volume sensiblement parallélépipédique V' que forme chaque orifice traversant 42 au sein de la bague extérieure 4 est supérieur au volume sensiblement parallélépipédique V dans lequel s'inscrit chaque doigt de basculement 34 de la bague intérieure 3, de sorte que chaque doigt peut venir loger dans le logement formé par le premier orifice.

Avantageusement, mais de manière non exclusive, quel que soit leur nombre, les orifices traversants 42 sont angulairement régulièrement répartis au sein de l'anneau que forme la bague extérieure 4. Il est toutefois envisageable que, pour des raisons d'encombrement ou pour d'autres raisons mécaniques, la répartition angulaire des orifices traversants 42 au sein de l'anneau que forme cette bague extérieure 4 soit différente. Selon le mode de réalisation préféré de l'invention illustré par la figure 3, les orifices traversants 42 sont au nombre de 3, et ils sont angulairement régulièrement répartis au sein de l'anneau que forme la bague extérieure 4. Un angle de 120° est ainsi formé entre deux orifices traversants 42 consécutifs. Selon d'autres modes de réalisation, le nombre de doigts anti-basculement 34 peut être différent, sans qu'il nuise à l'invention. Dans tous les cas, selon l'invention, il convient que le nombre d'orifices traversants 42 ménagés au sein de la bague extérieure 4 soit égal ou supérieur au nombre de doigts anti-basculement 34 que comporte la bague intérieure 3.

Selon l'invention, les parois 43 délimitant chacun des orifices traversants 42 sont percées axialement d'au moins un orifice débouchant. Par axialement, on entend parallèlement à l'axe de révolution de la bague extérieure 4. Dans l'exemple illustré, chaque orifice traversant 42 est doté de deux orifices débouchants en regard l'un de l'autre, agencés sur des côtés opposés de la paroi correspondante. En référence aux conventions de dénomination précédemment définies et à l'orientation des différentes figures, un premier orifice débouchant 44 est percé dans la paroi interne 43 qui délimite le volume V', précédemment défini, en sa partie supérieure, et un deuxième orifice débouchant 45 est percé dans la paroi interne 43 qui délimite ce même volume V' en sa partie inférieure. Chacun des premier et deuxième orifices débouchants traverse la paroi interne 43 dans laquelle il est percé, et met ainsi en communication le volume V' défini par l'orifice traversant 42 correspondant au sein de la bague extérieure 4 avec, respectivement, la face supérieure 46 et la face inférieure 47 de la bague extérieure 4.

Chaque orifice débouchant présente la forme d'un alésage de section circulaire, et il peut être intéressant que les centres des premier et deuxième orifices débouchants soient alignés selon une direction sensiblement parallèle à celle de l'axe commun de la bague extérieure 4 et de la bague intérieure 3. Par ailleurs, on pourra prévoir indifféremment que les diamètres des premier et deuxième orifices débouchants sont identiques ou différents.

Selon l'invention, les bagues intérieure 3 et extérieure 4 sont définies de telle manière que, au sein de l'ensemble de support qu'elles forment avec l'élément de découplage 5, chaque orifice traversant 42 se trouve, radialement, dans la même position que l'un des doigts anti-basculement 34. Plus précisément, les bagues intérieure 3 et extérieure 4 sont conformées de telle manière que chaque doigt anti-basculement 34 de la bague intérieure 3 s'étend au sein du deuxième volume sensiblement parallélépipédique V' formé par l'orifice traversant 42 au regard duquel il se trouve. La longueur de chacun des doigts anti-basculement 34 peut être définie de telle manière que celui-ci s'étende sensiblement, au travers de la bague extérieure 4, sur tout ou partie de l'épaisseur de l'orifice traversant 42 correspondant. Dans tous les cas, la longueur de chaque doigt anti-basculement 34 est définie de telle manière que, d'une part, au moins une partie de la surface du premier orifice débouchant 44 soit au regard de la branche supérieure du doigt anti-basculement 34 correspondant, et que, d'autre part, au moins une partie de la surface du deuxième orifice débouchant 45 soit au regard de la branche inférieure du doigt anti-basculement 34 correspondant. En d'autres termes, chaque doigt anti-basculement 34 forme, au sein de l'orifice traversant 42 dans lequel il est engagé, une obstruction au passage d'un élément (non représenté sur les figures) tel que, par exemple, une tige, que l'on souhaiterait insérer sensiblement axialement pour qu'elle traverse simultanément le premier orifice débouchant 44 et le deuxième orifice débouchant 45.

L'angle de vue choisi pour la figure 4 permet une illustration plus précise de la configuration de la bague intérieure 3 et de la bague extérieure 4 au sein de l'ensemble B. Il apparaît clairement sur cette figure que chaque doigt anti-basculement 34 est engagé dans un orifice traversant 42 de la bague extérieure 4, et que, les bagues intérieure 3 et extérieure 4 étant coaxiales, leurs dimensions sont définies de telle manière qu'il existe, entre la paroi extérieure 33 de la bague intérieure 3 et la paroi intérieure 40 de la bague extérieure 4, un espace 6 sensiblement annulaire. Plus précisément, l'espace annulaire 6 est constitué de portions successives d'un même espace annulaire, séparés entre elles par les doigts anti-basculement 34 radialement placés entre la bague intérieure 3 et la bague extérieure 4. Il est également clairement visible sur la figure 4 que chaque doigt anti-basculement 34 obstrue, au sein de l'orifice traversant 42 dans lequel il est engagé, le passage axial du premier orifice débouchant 44 vers le deuxième orifice débouchant 45 correspondant.

Il est à noter que, ainsi qu'il a été indiqué plus haut, le deuxième volume V', défini par chaque orifice traversant 42 au sein de la bague extérieure 4, étant supérieur au premier volume V, dans lequel s'inscrit chaque doigt anti-basculement 34, chacun de ces doigts anti-basculement peut avoir un mouvement axial, radial, ou une combinaison de ces deux mouvements au sein de l'orifice traversant 42 dans lequel il est engagé. Ces mouvements, dont l'amplitude est sensiblement de l'ordre de quelques millimètres, définissent les degrés de liberté de la bague intérieure 3 par rapport à la bague extérieure 4 au sein de l'ensemble B et, par là, les degrés de liberté du moteur par rapport au boîtier 2. Au sein de l'ensemble B de support selon l'invention, l'élément de découplage 5 permet d'amortir ces vibrations, et de rendre les éventuels mouvements et à-coups du rotor par rapport au stator aussi indépendants que possible du reste du dispositif de chauffage, ventilation et/ou climatisation.

L'élément de découplage 5 se présente sous la forme d'une pièce réalisée dans un matériau présentant une aptitude à amortir les vibrations, tel que, à titre d'exemple non limitatif, un matériau élastomère. Avantageusement, la géométrie et les dimensions de l'élément de découplage 5 le rendent apte à être, d'une part, inséré entre la bague intérieure 3 et la bague extérieure 4 et, d'autre part, entre la bague extérieure 4 et une paroi interne de la cavité de réception ménagée dans le boîtier 2. Selon le mode de réalisation illustré par les figures, la forme de l'élément de découplage 5 est définie de telle manière que celui-ci occupe, entre autres, l'espace annulaire 6 existant entre la bague intérieure 3 et la bague extérieure 4. L'élément de découplage 5, selon ce mode de réalisation de l'invention, comporte également une lèvre périphérique 50 apte à coopérer avec la périphérie extérieure de la bague extérieure 4 et avec la paroi intérieure du boîtier 2 dans lequel l'ensemble qu'il forme avec la bague intérieure 3 et la bague extérieure 4 est accueilli. Selon d'autres modes de réalisation de l'invention, l'élément de découplage 5 peut être constitué de plusieurs parties discrètes venant se placer en des zones préalablement définies, entre la bague intérieure 3 et la bague extérieure 4, d'une part, et entre la bague extérieure 4 et le boîtier 2, d'autre part, afin d'obtenir les propriétés de découplage vibratoire recherchées.

Selon l'invention, la forme de l'élément de découplage 5 est définie de telle manière que celui-ci épouse sensiblement, au sein de chaque orifice traversant 42 de la bague extérieure 4, la forme extérieure du doigt anti-basculement 34 engagé dans cet orifice traversant. Plus précisément, et comme le montrent la figure 5 et la figure 8, l'élément de découplage 5 forme, au niveau de chaque orifice traversant 42 de la bague extérieure 4 :
- une première paroi 51 dont la forme et les dimensions sont telles qu'elle épouse, en étant plaquée contre elles, les parois 43 du deuxième volume intérieur sensiblement parallélépipédique V' formé par l'orifice traversant 42 considéré,
- une deuxième paroi 52 dont la forme et les dimensions sont telles qu'elle épouse les contours extérieurs du doigt anti-basculement 34 qui s'étend au sein de l'orifice traversant 42 considéré.

Avantageusement, des orifices (non repérés sur les figures) sont ménagés dans l'élément de découplage 5 au regard de chacun des premier et deuxième orifices débouchants, 44, 45, percés axialement dans les parois qui délimitent chaque orifice traversant 42, afin de ne pas gêner le passage depuis l'extérieur de la bague extérieure 4 vers l'orifice traversant 42. Avantageusement, ces orifices sont de même diamètre que les orifices débouchants correspondants.

Selon une autre caractéristique avantageuse de l'invention, la première paroi 51 et la deuxième paroi 52 sont conformées de telle manière qu'un léger espace E (visible sur la figure 8), de l'ordre de quelques millimètres, demeure entre elles, et notamment axialement entre l'élastomère recouvrant la branche supérieure du doigt et l'élastomère recouvrant la partie supérieure de la paroi délimitant l'orifice traversant, et axialement entre l'élastomère recouvrant la branche inférieure du doigt et l'élastomère recouvrant la partie inférieure de la paroi délimitant l'orifice traversant. Les mouvements des doigts anti-basculement 34 à l'intérieur des orifices traversants 42, consécutifs aux mouvements relatifs de la bague intérieure 3 et de la bague extérieure 4, restent ainsi possibles. Mais, lorsque la bague intérieure 3 et la bague extérieure 4, sous l'effet de la rotation du moteur 1, ont des mouvements relatifs entre elles qui pourraient conduire les doigts anti-basculement 34 à percuter les parois intérieures 43 des orifices traversants 42 au sein desquels ils s'étendent, ces mouvements sont amortis par l'élasticité naturelle du matériau constituant l'élément de découplage 5. Il s'ensuit, d'une part, une réduction (voire une suppression) de la transmission du mouvement de la bague intérieure 3 à la bague extérieure 4 (et, par là, au boîtier 2 du dispositif de chauffage, ventilation et/ou climatisation) et, d'autre part, une suppression d'éventuels bruits de claquement induits par cette percussion. Il est à noter que la forme particulière de chaque doigt anti-basculement 34, dont la section, selon un plan perpendiculaire à la direction radiale selon laquelle il s'étend, a sensiblement la forme d'un H renversé, contribue également, par la conformation et les dimensions de ce H, à atténuer et à amortir vibrations et bruits de claquement qu'elles peuvent générer.

La persistance du léger espace libre E (de l'ordre de 1 à 3 millimètres) autour de chaque doigt anti-basculement 34, au sein de l'orifice traversant 42 correspondant, conduit toutefois à la persistance de la transmission de certaines vibrations.

Tel que visible sur les figures 1, 7, 8, et 9, l'ensemble de support comporte des moyens de réduction du débattement des doigts anti-basculement, afin de mettre en œuvre des butées axiales additionnelles qui permettent de réduire encore la possibilité de mouvement relatif axial de la bague intérieure 3 par rapport à la bague extérieure 4. Les moyens de réduction du débattement sont portés sur la bague sur laquelle est agencé le logement, ici la bague extérieure, tandis que les doigts anti-basculement sont agencés sur l'autre bague, ici la bague intérieure. On comprend que les doigts anti-basculement et les moyens de réduction du débattement de ces doigts anti-basculement forment les moyens de limitation du basculement de la bague intérieure par rapport à la bague extérieure selon l'invention.

Les moyens de réduction du débattement consistent en la présence, dans le logement formé par le premier orifice 42, de deux pions. Les pions sont agencés parallèlement à l'axe de révolution de la bague sur laquelle sont formés les logements, et perpendiculairement à l'axe d'allongement du doigt anti-basculement.

Selon le mode de réalisation, non limitatif, illustré par ces figures, l'invention peut mettre en œuvre deux types de pions, dont un premier type de pions fixe 22 et un deuxième type de pions 7, ici amovibles. On pourra prévoir que dans le cas de moyens de réduction du débattement formés de deux pions agencés de part et d'autre du doigt anti-basculement 34, un pion fixe 22 est associé à un pion amovible 7 ou bien que deux pions amovibles 7 sont associés.

Un premier type de butées est formé par un ensemble de pions fixes 22, formés au sein du boîtier 2 du dispositif de chauffage, ventilation et/ou climatisation du dispositif de climatisation du véhicule, étant entendu que l'on entend par pion « fixe » un pion qui reste à demeure sur le boîtier, ou sur tout élément structurel qui le supporte, la séparation du pion et de cet élément structurel entraînant la destruction de l'un et/ou de l'autre. Selon l'invention, chaque pion fixe 22 est dimensionné et placé de telle manière que, lorsque l'ensemble formé par la bague intérieure 3, la bague extérieure 4 et l'élément de découplage est accueilli dans la cavité de réception 21 du boîtier 2, ce pion fixe 22 se trouve engagé dans un premier orifice débouchant 44 percé dans la partie supérieure de la paroi 43 délimitant un orifice traversant 42. Selon différents modes de réalisation, la forme des pions fixes 22 peut être sensiblement cylindrique ou sensiblement tronconique. Cette dernière forme peut permettre un engagement plus aisé du pion fixe 22 dans le premier orifice débouchant 44. Selon le mode de réalisation préféré de l'invention représenté par les figures, non limitatif, trois pions fixes 22 sont angulairement régulièrement répartis au sein de la cavité de réception 21, en correspondance avec les orifices traversants 42 de la bague 4 et les doigts anti-basculement 34. Selon d'autres modes de réalisation, le nombre, l'emplacement et la répartition angulaire des pions fixes 22 peut varier. Dans tous les cas, toutefois, le nombre de pions fixes 22 est égal ou inférieur au nombre d'orifices traversants 42 et de doigts anti-basculement 34, et leur position est définie de telle manière que chaque pion fixe 22 soit, au sein de l'ensemble de support B, engagé dans un premier orifice débouchant 44. Comme le montrent la figure 5 et, de manière plus précise, la figure 8, en référence aux dénominations et orientations définies plus haut, la hauteur de chaque pion fixe 22, à partir de la paroi intérieure de la cavité de réception 21, est définie de telle manière que, une fois l'ensemble de support B réalisé, l'extrémité libre, ou extrémité inférieure, du pion fixe 22 se trouve à l'intérieur de l'orifice traversant 42 et au plus près de la branche supérieure du doigt anti-basculement 34 avec lequel il est en regard. Chaque pion fixe 22 limite ainsi l'amplitude d'un éventuel mouvement axial que le doigt anti-basculement 34 correspondant pourrait avoir dans sa direction.

Un deuxième type de butées mises en œuvre par l'invention est formé par des pions amovibles 7. Selon le mode de réalisation préféré, non limitatif, visible sur la figure 1, l'invention met en œuvre un ensemble de plusieurs pions amovibles 7, élémentaires, distincts, pouvant être utilisés ensemble ou séparément. On pourra se référer aux figures 7 à 9 pour détailler la structure de ces pions amovibles 7. Chacun d'entre eux est constitué d'un ergot 70 sensiblement cylindrique et d'une base 71 (notamment visible sur la figure 9) qui s'étend sensiblement perpendiculairement à l'ergot 70, à partir d'une des extrémités de celui-ci. Selon le mode de réalisation illustré par les figures, la base 71 a sensiblement une forme allongée, à partir du centre duquel s'étend l'ergot 70. Les formes et dimensions de chaque pion amovible 7 sont définies de telle manière que l'ergot 70 soit apte à être engagé dans un deuxième orifice débouchant 45 percé axialement dans la partie inférieure de la paroi 43 délimitant un orifice traversant 42. Ces formes et dimensions sont également définies pour que, lors de cet engagement, la base 71 du pion amovible 7 vienne en appui de la surface inférieure 47 de la bague extérieure 4. La base comporte à chacune de ses extrémités un œillet permettant l'indexage et/ou la fixation de la base 71 sur la face inférieure 47 de la bague extérieure 4 de l'ensemble de support, dans une fixation mécanique du type bouterollage ou rivetage.

Selon différents modes de réalisation, l'ergot 70 peut avoir une forme sensiblement cylindrique ou sensiblement tronconique, son diamètre diminuant vers son extrémité opposée à celle par laquelle il est rattaché à sa base 71. Dans ce dernier cas, la forme sensiblement tronconique peut faciliter l'engagement de l'ergot 70 au sein du deuxième orifice 45. Avantageusement, le nombre de pions amovibles 7 est donc identique au nombre d'orifices traversants 42 et au nombre de doigts anti-basculement 34. Comme le montre plus précisément la figure 8, la hauteur de l'ergot 70 de chaque pion amovible 7 est définie de telle manière que, une fois le pion amovible 7 mis en place, l'extrémité libre de son ergot 70 se trouve à l'intérieur de l'orifice traversant 42 et au plus près de la branche inférieure du doigt anti-basculement 34 avec lequel il est en regard. Chaque pion amovible 7 limite ainsi l'amplitude d'un éventuel mouvement axial que le doigt anti-basculement 34 correspondant pourrait avoir dans sa direction.

Les pions fixes 22, d'une part, et les pions amovibles 7, d'autre part, permettent ainsi, de limiter les mouvements axiaux de la bague intérieure 3 par rapport à la bague extérieure 4. Par mouvements axiaux, on entend des mouvements le long des axes des premier et deuxième orifices débouchants 44, 45, selon une direction sensiblement parallèle à l'axe de révolution de la bague extérieure et/ou sensiblement parallèle à l'axe de révolution de la bague intérieure. On comprend que les doigts anti-basculement 34 sont agencés de manière à ce que les branches parallèles sont disposées perpendiculairement à l'axe de révolution des bagues pour offrir une surface d'appui perpendiculaire aux pions formant les moyens de réduction du débattement.

Sur la figure 6, on a rendu visible la découpe particulière de l'élément de découplage 5. Celui-ci présente, en sa partie située entre la bague intérieure 3 et la bague extérieure 4, un ensemble de rebords 53 dont la section, selon un plan radial, a sensiblement la forme d'un U renversé dont la base est orientée, selon les dénominations et orientations précédemment définies, vers la partie supérieure de l'ensemble B. Les rebords 53, par leur conformation en U, forment un ensemble de soufflets qui augmentent la liberté de mouvement de la bague intérieure 3 par rapport à la bague extérieure 4, tant tangentiellement qu'axialement, sans risque de déchirement de l'élément de découplage 5 lors de tels mouvements.

L'invention permet donc, grâce à la présence des doigts anti-basculement 34 de la bague intérieure 3 qui s'étendent au sein des orifices traversants 42 de la bague extérieure 4, de réaliser, entre bague intérieure 3 et bague extérieure 4, une liaison qui, à la fois, empêche toute désolidarisation de ces deux bagues entre elles, et permette des mouvements relatifs de l'une de ces bagues par rapport à l'autre. Grâce à la présence de l'élément de découplage 5 et par l'existence des première et deuxième parois 51, 52, de celui-ci, cette liaison est apte à limiter fortement toute transmission, à la bague extérieure 4, d'une éventuelle vibration résultant d'un mouvement ou d'un à-coup du moteur 1 en cours de fonctionnement. Le fait que les doigts anti-basculement 34 soient réalisés issus de la matière de la bague intérieure 3 permet, en outre, de simplifier la fabrication de l'ensemble formé de la bague intérieure 3, de la bague extérieure 4, et de l'élément de découplage, et d'en diminuer les coûts de réalisation.

De plus, par la présence des pions fixes 22 et des pions amovibles 7, l'invention permet, tout en maintenant un certain degré de liberté de mouvement de la bague intérieure 3 par rapport à la bague extérieure 4, une réduction supplémentaire des mouvements relatifs de basculement (en particulier des mouvements relatifs dirigés selon l'axe de ces bagues) que ces deux bagues pourraient avoir l'une par rapport à l'autre. Il est à noter que, selon différents modes de réalisation et de mise en œuvre de l'invention, les pions amovibles 7 peuvent être tous mis en place, ou certains d'entre eux seulement peuvent être utilisés. De même, s'il apparaît préférable, pour des raisons de coût, que ces pions amovibles 7 aient tous les mêmes formes et dimensions, il est tout à fait envisageable, sans que cela nuise à l'invention, que différentes formes soient réalisées, notamment en ce qui concerne la base 71, et que différentes longueurs d'ergot 70 soient mises en œuvre sur un même ensemble B, pour répondre à des objectifs mécaniques spécifiques.

On pourra obtenir l'ensemble constitué de la bague intérieure 3, la bague extérieure 4, et l'élément de découplage 5 tels qu'ils viennent d'être décrits, par un procédé de fabrication semblable à celui qui va être décrit par la suite. Dans une première étape de ce procédé, la bague intérieure 3 et la bague extérieure 4 sont formées par injection d'un matériau polymère dans un moule, en une seule opération. Au cours de cette opération, un premier coulisseau est mis en place dans chaque orifice traversant 42 appelé à recevoir un doigt anti-basculement 34. Les formes et dimensions de ce premier coulisseau sont telles que sa présence, au sein d'un orifice traversant donné, définit, lors de l'injection du matériau constituant la bague intérieure 3, la forme et les dimensions du doigt anti-basculement appelé à être engagé dans l'orifice traversant considéré. Plus précisément, avantageusement, la forme et les dimensions de ce premier coulisseau définissent à la fois le volume V' de chaque orifice traversant 42 et les formes et dimensions extérieures du doigt anti-basculement 34 engagé en son sein.

Dans une deuxième étape du procédé, le premier coulisseau est retiré et remplacé, au sein de chaque orifice traversant 42 de la bague extérieure 4, par un deuxième coulisseau, puis le matériau constituant l'élément de découplage 5 est injecté dans le moule, les bagues intérieure 3 et extérieure 4 étant toujours en place dans ce moule. Avantageusement, les formes et dimensions du deuxième coulisseau sont ici telles que la présence de ce deuxième coulisseau définit, lors de l'injection du matériau constituant l'élément de découplage, les formes et dimensions des première et deuxième parois 51, 52 précédemment définies.

Au cours d'une dernière étape du procédé, l'ensemble est démoulé.

L'invention, telle qu'elle vient d'être décrite, ne se limite toutefois aux modes et configurations décrits et illustrés par le présent document, mais elle s'étend à tous modes et/ou configurations équivalents et à toute combinaison techniquement opérante de tels modes et/ou configurations. En particulier, si les doigts anti-basculement décrits ici ont tous les mêmes formes et dimensions, il est tout à fait envisageable, sans que cela nuise à l'invention, que les dimensions et/ou formes de tout ou partie d'entre eux diffèrent, dans la mesure où ces doigts anti-basculement présentent les mêmes fonctions et avantages que ceux décrits ici. Il en va de même pour les premiers orifices au sein desquels ces doigts anti-basculement s'étendent. De même, si l'élément de découplage décrit ici est constitué d'une seule pièce, il est tout à fait envisageable, sans que cela nuise à l'invention, qu'il soit constitué de plusieurs éléments discrets placés en différents endroits de l'ensemble de support et de liaison selon l'invention, dans la mesure où ces éléments présentent les caractéristiques fonctionnelles décrites ici. Enfin, si les pions amovibles sont ici présentés comme un ensemble d'éléments distincts, pouvant être mis en œuvre séparément ou ensemble, il est tout à fait envisageable que ces pions amovibles soient tous portés par une couronne unique, amovible, apte à se placer contre la face inférieure (en référence aux dénominations définies au début du présent document) de la bague extérieure.

## Revendications

1. Ensemble de support pour un moteur (1), l'ensemble comprenant deux bagues coaxiales dont une bague intérieure (3) apte à recevoir un ou plusieurs éléments dudit moteur et une bague extérieure (4) apte à être fixée sur un boîtier formant élément de structure (2), l'ensemble comportant des moyens de limitation du basculement de la bague intérieure (3) par rapport à la bague extérieure (4) dont un élément saillant (34) qui s'étend en saillie d'une première des deux bagues, pour venir loger dans un logement (42) formé dans la deuxième des deux bagues, et des moyens de réduction du débattement (7, 22) de l'élément saillant (34) à l'intérieur dudit logement, l'ensemble comportant en outre un élément de découplage (5) qui est inséré entre la bague intérieure (3) et la bague extérieure (4) et se prolonge autour d'au moins un des éléments saillants (34) au sein de chaque logement (42) dans lequel il est engagé, ledit au moins un moyen de réduction du débattement (7, 22) associé s'étendant en regard de la partie de l'élément de découplage (5) autour dudit élément saillant (34),
les moyens de réduction du débattement comportant deux pions (7, 22) disposés en regard l'un de l'autre, venant respectivement en saillie d'une paroi (43) définissant ledit logement (42) pour s'étendre à l'intérieur dudit logement en regard d'une face de l'élément saillant (34), lesdits deux pions (7, 22) s'étendant à l'intérieur du logement (42) de part et d'autre de l'élément saillant (34) relativement à un axe sensiblement parallèle à un axe de révolution de la première des deux bagues, en venant en saillie de deux parois opposées (43),
**caractérisé en ce que** les parois opposées (43) qui délimitent axialement chaque logement (42) formé dans la deuxième des deux bagues (4) sont percées, selon une direction parallèle à celle de l'axe de ladite deuxième bague (4), respectivement d'un premier orifice débouchant (44) et d'un deuxième orifice débouchant (45) pour être traversés respectivement par un desdits deux pions (7, 22), et **en ce que** lesdits premier et deuxième orifices débouchants (44, 45) sont agencés de telle manière que leurs surfaces se trouvent, dans leur totalité, respectivement au regard de deux faces parallèles opposées de l'élément saillant (34) engagé dans le logement (42) considéré.

2. Ensemble selon la revendication 1, **caractérisé en ce que** les moyens de réduction du débattement (7, 22) s'étendent selon une direction sensiblement parallèle à un axe de révolution de la bague intérieure (3).

3. Ensemble selon la revendication 1 ou 2, **caractérisé en ce que** les moyens de réduction du débattement (7, 22) s'étendent selon une direction sensiblement perpendiculaire à la direction d'allongement de l'élément saillant (34).

4. Ensemble selon l'une des revendications précédentes, **caractérisé en ce que** les deux orifices débouchants (44, 45) sont coaxiaux.

5. Ensemble selon l'une des revendications précédentes, **caractérisé en ce qu'**il comporte un premier type de pions (22) formant butée axiale, selon lequel chaque pion (22) est apte à être engagé dans le premier orifice débouchant (44) d'un logement (42), ainsi qu'un deuxième type de pions (7) formant butée axiale, selon lequel chaque pion (7) est apte à être engagé dans le deuxième orifice débouchant (45) du même logement (42).

6. Ensemble selon la revendication précédente, **caractérisé en ce que** le premier type de pions formant butée axiale est constitué de pions fixes (22) agencés à la surface intérieure d'une cavité de réception ménagée dans le boîtier (2) pour accueillir l'ensemble formé par la bague intérieure (3) et la bague extérieure (4).

7. Ensemble selon l'une quelconque des revendications 5 ou 6, **caractérisé en ce que** le deuxième type de pions (7) formant butée axiale est fixé à la deuxième des deux bagues (4) par bouterollage ou par vissage.

8. Ensemble selon l'une quelconque des revendications 5 à 7, **caractérisé en ce qu'**il comporte autant de pions du premier type (22) et de pions du deuxième type (7) que de logements (42) et d'éléments saillants (34).

9. Ensemble selon l'une des revendications 6 à 8, **caractérisé en ce qu'**une pluralité de pions du premier type, respectivement du deuxième type, est angulairement régulièrement répartie sur une première face de la deuxième des deux bagues (4) et une pluralité de pions du deuxième type, respectivement du premier type, est angulairement régulièrement répartie sur une deuxième face opposée de la deuxième des deux bagues (4).

10. Dispositif de chauffage, de ventilation et/ou de climatisation pour un véhicule automobile, **caractérisé en ce qu'**il comporte un moteur et un ensemble de support de ce moteur selon l'une des revendications précédentes.

11. Dispositif selon la revendication précédente, dans lequel l'ensemble de support du moteur est conforme aux revendications 6 et 7, **caractérisé en ce que** les pions amovibles (7) sont agencés du côté de l'ensemble de support opposé au moteur (1), les pions fixes (22) étant agencés du côté du moteur.

## Patentansprüche

1. Traganordnung für einen Motor (1), die Anordnung umfassend zwei koaxiale Ringe, davon einen Innenring (3), der geeignet ist, ein oder mehrere Elemente des Motors aufzunehmen, und einen Außenring (4), der geeignet ist, an einem Gehäuse befestigt zu sein, das ein Strukturelement (2) bildet, die Anordnung aufweisend Mittel zur Begrenzung des Kippens des Innenrings (3) bezogen auf den Außenring (4), davon ein hervorstehendes Element (34), das sich von einem ersten der zwei Ringe hervorstehend erstreckt, um in einer Aufnahme (42) aufgenommen zu sein, die im zweiten der zwei Ringe ausgebildet ist, und Mittel zur Minderung der Verschiebung (7, 22) des hervorstehenden Elements (34) innerhalb der Aufnahme, die Anordnung ferner aufweisend ein Entkopplungselement (5), das zwischen dem Innenring (3) und dem Außenring (4) eingefügt ist und sich um mindestens eins der hervorstehenden Elemente (34) innerhalb jeder Aufnahme (42), in die es eingreift, herum fortsetzt, wobei sich das zugehörige mindestens eine Mittel zur Minderung der Verschiebung (7, 22) gegenüber dem Abschnitt des Entkopplungselements (5) um das hervorstehende Element (34) herum erstreckt, die Mittel zur Minderung der Verschiebung aufweisend zwei Stifte (7, 22), die einander gegenüberliegend angeordnet sind, die jeweils von einer Wand (43) hervorstehen, die die Aufnahme (42) definiert, um sich innerhalb der Aufnahme gegenüber einer Seite des hervorstehenden Elements (34) zu erstrecken, wobei sich die zwei Stifte (7, 22) innerhalb der Aufnahme (42) beiderseits des hervorstehenden Elements (34) bezogen auf eine Achse erstrecken, die im Wesentlichen parallel zu einer Umdrehungsachse des ersten der zwei Ringe verläuft, wobei sie von zwei gegenüberliegenden Wänden (43) hervorstehen, **dadurch gekennzeichnet, dass** die gegenüberliegenden Wände (43), die jede Aufnahme (42) axial begrenzen, die im zweiten der zwei Ringe (4) ausgebildet ist, in einer Richtung parallel zu jener der Achse des zweiten Rings (4) von einer ersten durchgehenden Öffnung (44) respektive einer zweiten durchgehenden Öffnung (45) durchdrungen sind, um jeweils von einem der zwei Stifte (7, 22) durchquert zu werden, und dadurch, dass die erste und zweite durchgehende Öffnung (44, 45) so angeordnet sind, dass sich ihre Flächen insgesamt jeweils gegenüber zweier gegenüberliegender paralleler Seiten des hervorstehenden Elements (34) befinden, das in die betrachtete Aufnahme (42) eingreift.

2. Anordnung nach Anspruch 1, **dadurch gekennzeichnet, dass** sich die Mittel zur Minderung der Verschiebung (7, 22) in einer Richtung im Wesentlichen parallel zu einer Umdrehungsachse des Innenrings (3) erstrecken.

3. Anordnung nach Anspruch 1 oder 2, **dadurch gekennzeichnet, dass** sich die Mittel zur Minderung der Verschiebung (7, 22) in einer Richtung im Wesentlichen senkrecht zur Erstreckungsrichtung des hervorstehenden Elements (34) erstrecken.

4. Anordnung nach einem der vorhergehenden Ansprüche, **dadurch gekennzeichnet, dass** die zwei durchgehenden Öffnungen (44, 45) koaxial sind.

5. Anordnung nach einem der vorhergehenden Ansprüche, **dadurch gekennzeichnet, dass** sie eine erste Art von Stiften (22) aufweist, die einen Axialanschlag bilden, wobei jeder Stift (22) geeignet ist, mit der ersten durchgehenden Öffnung (44) einer Aufnahme (42) in Eingriff zu stehen, sowie eine zweite Art von Stiften (7), die einen Axialanschlag bilden, wobei jeder Stift (7) geeignet ist, mit der zweiten durchgehenden Öffnung (45) derselben Aufnahme (42) in Eingriff zu stehen.

6. Anordnung nach dem vorhergehenden Anspruch, **dadurch gekennzeichnet, dass** die erste Art von Stiften, die einen Axialanschlag bilden, von festen Stiften (22) gebildet ist, die an der Innenfläche einer Aufnahmeausnehmung angeordnet sind, die im Gehäuse (2) angeordnet ist, um die Anordnung aufzunehmen, die vom Innenring (3) und dem Außenring (4) gebildet ist.

7. Anordnung nach einem der Ansprüche 5 oder 6, **dadurch gekennzeichnet, dass** die zweite Art von Stiften (7), die einen Axialanschlag bilden, durch Vernietung oder Verschraubung am zweiten der zwei Ringe (4) befestigt ist.

8. Anordnung nach einem der Ansprüche 5 bis 7, **dadurch gekennzeichnet, dass** sie so viele Stifte der ersten Art (22) und Stifte der zweiten Art (7) wie Aufnahmen (42) und hervorstehende Elemente (34) aufweist.

9. Anordnung nach einem der Ansprüche 6 bis 8, **dadurch gekennzeichnet, dass** eine Mehrzahl von Stiften der ersten Art respektive zweiten Art winklig regelmäßig auf einer ersten Seite des zweiten der zwei Ringe (4) und eine Mehrzahl von Stiften der zweiten Art respektive ersten Art winklig regelmäßig auf einer zweiten, gegenüberliegenden Seite des zweiten der zwei Ringe (4) verteilt ist.

10. Heizungs-, Lüftungs- und/oder Klimatisierungsvorrichtung für ein Kraftfahrzeug, **dadurch gekennzeichnet, dass** sie einen Motor und eine Traganordnung dieses Motors nach einem der vorhergehenden Ansprüche aufweist.

11. Vorrichtung nach dem vorhergehenden Anspruch, wobei die Traganordnung des Motors den Ansprüchen 6 und 7 entspricht, **dadurch gekennzeichnet, dass** die abnehmbaren Stifte (7) auf der Seite der Traganordnung gegenüber dem Motor (1) angeordnet sind, wobei die festen Stifte (22) auf der Seite des Motors angeordnet sind.

## Claims

1. Support assembly for a motor (1), the assembly comprising two coaxial rings, these being an inner ring (3) able to accept one or more elements of said motor and an outer ring (4) able to be fixed to a housing forming an element of the structure (2), the assembly comprising tilt-limiting means limiting the tilting of the inner ring (3) with respect to the outer ring (4), these being a projecting element (34) which projects out from a first of the two rings, to become housed in a housing space (42) formed in the second of the two rings, and travel-reducing means (7, 22) reducing the travel of the projecting element (34) inside said housing space, the assembly further comprising an uncoupling element (5) which is inserted between the inner ring (3) and the outer ring (4) and extends around at least one of the projecting elements (34) within each housing space (42) in which it is engaged, said at least one associated travel-reducing means (7, 22) extending facing the part of the uncoupling element (5) around said projecting element (34),
the travel reducing means comprising two pegs (7, 22) arranging facing one another, projecting respectively from a wall (43) defining said housing space (42) to extend into said housing space facing a face of the projecting element (34), said two pegs (7, 22) extending into the housing space (42) on either side of the projecting element (34) relative to an axis substantially parallel to an axis of revolution of the first of the two rings, projecting from two opposite walls (43),
**characterized in that** the opposite walls (43) which axially delimit each housing space (42) formed in the second of the two rings (4) are pierced in a direction parallel to that of the axis of said second ring (4) with a first open-ended orifice (44) and with a second open-ended orifice (45) respectively, so that a respective one of said two pegs (7, 22) can pass through them, and **in that** said first and second open-ended orifices (44, 45) are arranged in such a way that their surfaces lie, in their entirety, respectively facing two opposite parallel faces of the projecting element (34) that is engaged in the housing space (42) concerned.

2. Assembly according to Claim 1, **characterized in that** the travel-reducing means (7, 22) extend in a direction substantially parallel to an axis of revolution of the inner ring (3).

3. Assembly according to Claim 1 or 2, **characterized in that** the travel-reducing means (7, 22) extend in a direction substantially perpendicular to the direction of elongation of the projecting element (34) .

4. Assembly according to one of the preceding claims, **characterized in that** the two open-ended orifices (44, 45) are coaxial.

5. Assembly according to one of the preceding claims, **characterized in that** it comprises a first type of peg (22), forming an axial end stop, whereby each peg (22) is able to be engaged in the first open-ended orifice (44) of a housing space (42), and a second type of peg (7) forming an axial end stop, whereby each peg (7) is able to be engaged in the second open-ended orifice (45) of that same housing space (42).

6. Assembly according to the preceding claim, **characterized in that** the first type of peg forming an axial end stop consists of fixed pegs (22) arranged at the interior surface of a receiving cavity formed in the housing (2) to accommodate the assembly formed by the inner ring (3) and the outer ring (4).

7. Assembly according to either one of Claims 5 and 6, **characterized in that** the second type of peg (7) forming an axial end stop is fixed to the second of the two rings (4) using die heading or by screw fastening.

8. Assembly according to any one of Claims 5 to 7, **characterized in that** it comprises as many pegs of the first type (22) and pegs of the second type (7) as there are housing spaces (42) and projecting elements (34).

9. Assembly according to one of Claims 6 to 8, **characterized in that** a plurality of pegs of the first type, respectively of the second type, is uniformly angularly distributed over a first face of the second of the two rings (4), and a plurality of pegs of the second type, respectively of the first type, is uniformly angularly distributed over an opposite second face of the second of the two rings (4).

10. Heating, ventilation and/or air conditioning device for a motor vehicle, **characterized in that** it comprises a motor and a support assembly according to one of the preceding claims for supporting this motor.

11. Device according to the preceding claim, in which the motor support assembly is in accordance with Claims 6 and 7, **characterized in that** the removable pegs (7) are arranged on the side of the support assembly which is the opposite side to the motor (1), the fixed pegs (22) being arranged on the motor side.
